Europäisches Patentamt

European Patent Office

Office européen des brevets

(11) Veröffentlichungsnummer: **0 224 147**
**A2**

## EUROPÄISCHE PATENTANMELDUNG

(21) Anmeldenummer: 86115842.6

(22) Anmeldetag: **14.11.86**

(51) Int. Cl.⁴: **G07F 7/08** , G07F 7/10

(30) Priorität: **19.11.85 DE 3541032**

(43) Veröffentlichungstag der Anmeldung:
**03.06.87 Patentblatt 87/23**

(84) Benannte Vertragsstaaten:
**AT CH DE LI**

(71) Anmelder: **Siemens Aktiengesellschaft Berlin
und München
Wittelsbacherplatz 2
D-8000 München 2(DE)**

(72) Erfinder: **Heberle, Wolfgang, Dipl.-Phys.
Äussere Münchener Strasse 9
D-8190 Wolfratshausen(DE)**
Erfinder: **Ludwig, Max, Dipl.-Ing.(FH)
Am Kornacker 18 b
D-8000 München 70(DE)**

(54) Verfahren zur Übertragung von Identifikationsmerkmalen auf Kreditkarten.

(57) Verfahren zur Übertragung der persönlichen Identifikationsmerkmale der alten Kreditkarte (KK1) auf eine neue Kreditkarte (KK2) kurz vor oder nach dem wertmäßigen und/oder zeitlichen Ablauf der alten Kreditkarte (KK1) für mit einer zentralen Stelle verbundene elektrotechnische Endgeräte (EG).

Aufgabe der vorliegenden Erfindung ist es, ein Verfahren anzugeben, bei dem zur Erlangung einer neuen funktionsfähigen Kreditkarte keine weiteren Personen beteiligt sind.

Dies geschieht dadurch, daß die Identifikationsmerkmale der alten abgelaufenen Karte (KK1) im Endgerät (EG) unmittelbar auf die neue Kreditkarte (KK2) übertragen werden.

EP 0 224 147 A2

## Verfahren zur Übertragung von Identifikationsmerkmalen auf Kreditkarten

Die Erfindung beinhaltet ein Verfahren zur Übertragung der persönlichen Identifikationsmerkmale einer alten Kreditkarte auf eine neue Kreditkarte kurz vor oder nach dem wertmäßigen und/oder zeitlichen Ablauf der alten Kreditkarte für mit einer zentralen Stelle verbundene elektrotechnische Endgeräte, insbesondere für mit einem Vermittlungsamt verbundene fernmeldetechnische Geräte.

Um einen Mißbrauch von Kreditkarten zu vermeiden, werden diese mit den persönlichen Daten des Inhabers in Form von Codeziffern und Paßworten versehen. Diese Eingabe erfolgt üblicherweise bei einer ausgebenden zentralen Stelle, die die persönlichen Daten gespeichert hat und z. B. von Hand in die neue Kreditkarte eingibt. Hierbei wird es als nachteilig erachtet, daß unberechtigte Personen von diesen Daten Kenntnis erlangen, so daß dieser Personenkreis in den Besitz einer weiteren Kreditkarte gelangen und in mißbräuchlicher Weise verwenden kann.

Aufgabe der Erfindung ist es, ein Verfahren anzugeben, bei dem zur Erlangung einer neuen funktionsfähigen Kreditkarte keine weiteren Personen beteiligt sind.

Diese Aufgabe wird dadurch gelöst, daß die Identifikationsmerkmale der alten abgelaufenen Karte im Endgerät unmittelbar auf die neue Kreditkarte übertragen werden.

Dadurch können die zur Identifizierung des Karteninhabers dienenden Daten ohne Eingriffe oder Kenntniserlangung weiterer Personen direkt von der alten auf die neue Kreditkarte übertragen werden. Dies kann z. B. in der Weise erfolgen, daß bei nur einem im Endgerät angeordneten Leser zunächst die alte Kreditkarte eingegeben wird, deren Daten zwischengespeichert und anschließend bei Eingabe der neuen Kreditkarte auf diese übertragen werden. Durch dieses Verfahren lassen sich die durch Abholung oder Zusendung von neuen Kreditkarten bedingten Kosten ersparen.

Hierbei besteht weiterhin die Möglichkeit, daß die Identifikationsmerkmale der alten abgelaufenen Kreditkarte im Endgerät über eine die Merkmale vergleichende zentrale Stelle auf die neue Kreditkarte übertragen werden. Dabei können die auf der alten Karte vorhandenen persönlichen Daten nach der Übertragung gelöscht werden, so daß ein Mißbrauch von dieser Seite her ebenfalls ausgeschlossen ist. Weiterhin kann die alte Kreditkarte nach der Übertragung der persönlichen Daten von dem entsprechenden Gerät eingezogen werden, so daß sie nicht mehr einer möglichen Manipulation zugänglich ist.

Die Erfindung soll im folgenden anhand eines Ausführungsbeispieles erläutert werden.

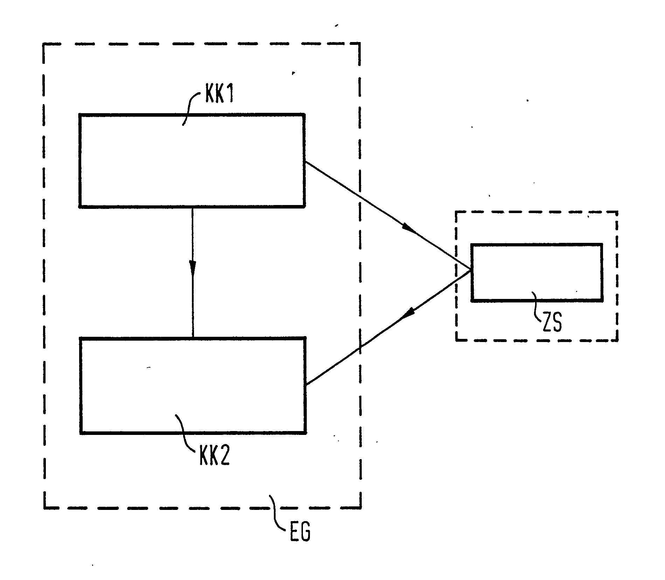

Die Abbildung zeigt schematisch die Übertragung der persönlichen Daten des Karteninhabers von der alten auf die neue Kreditkarte.

Mit KK1 ist eine alte, zeit-und/oder wertmäßig abgelaufene oder kurz vor dem Ablauf stehende Kreditkarte bezeichnet, während KK2 eine neue, noch nicht die persönlichen Daten des Karteninhabers enthaltende Kreditkarte darstellt. Beide Kreditkarten KK1 bzw. KK2 sind in ein elektrotechnisches Endgerät EG einschiebbar. In diesem Endgerät werden die persönlichen Daten des Karteninhabers direkt von der alten Kreditkarte KK1 auf die neue Kreditkarte KK2 übertragen. Dies kann in der Weise erfolgen, daß bei Vorhandensein von einem Leser im Endgerät EG die Daten der alten Kreditkarte KK1 zunächst zwischengespeichert und bei Eingabe der neuen Kreditkarte KK2 auf diese übertragen werden. Zur Übertragung der persönlichen Daten des Karteninhabers werden gemäß einem weiteren Ausführungsbeispiel von einer zentralen Stelle ZS aus nach einem entsprechenden Befehl die Daten überprüft und nach Bestätigung ihrer Richtigkeit auf die neue Kreditkarte KK2 übertragen.

Bezugszeichenliste

KK1 alte Kreditkarte
KK2 neue Kreditkarte
EG Endgerät
ZS zentrale Stelle

**Ansprüche**

1. Verfahren zur Übertragung der persönlichen Identifikationsmerkmale einer alten Kreditkarte auf eine neue Kreditkarte kurz vor oder nach dem wertmäßigen und/oder zeitlichen Ablauf der alten Kreditkarte für mit einer zentralen Stelle verbundene elektrotechnische Endgeräte, insbesondere für mit einem Vermittlungsamt verbundene fernmeldetechnische Geräte, **dadurch gekennzeichnet,** daß die Identifikationsmerkmale der alten abgelaufenen Karte (KK1) im Endgerät (EG) unmittelbar auf die neue Kreditkarte (KK2) übertragen werden.

2. Verfahren nach Anspruch 1, **dadurch gekennzeichnet,** daß die Identifikationsmerkmale der alten Kreditkarte (KK1) im Endgerät (EG) über eine die Merkmale vergleichende zentrale Stelle (ZS) auf die neue Kreditkarte (KK2) übertragen werden.

3. Verfahren nach Anspruch 1, **dadurch gekennzeichnet**, daß die Identifikationsmerkmale der alten Karte (KK1) nach Übertragung auf die neue Karte (KK2) gelöscht werden.

4. Verfahren nach Anspruch 1, **dadurch gekennzeichnet**, daß die alte Kreditkarte (KK1) nach Übertragung der Identifikationsmerkmale vom Endgerät (EG) eingezogen wird.